# FASCICULE DE BREVET EUROPEEN

(11) **EP 4 091 428 B1**
(45) Date de publication et mention de la délivrance du brevet: **29.07.2026**
(21) Numéro de dépôt: 22173520.2
(22) Date de dépôt: 16.05.2022
(51) Int. Cl.: A01D 75/20, A01D 78/10

(54) **MACHINE DE FENAISON AVEC PANNEAU DE SIGNALISATION**
HEUWERBUNGSMASCHINE MIT WARNTAFEL
HAYMAKING MACHINE WITH SIGNALISATION PANEL

(30) Priorité: 18.05.2021 FR 2105173
(43) Date de publication de la demande: 23.11.2022
(73) Titulaire: Kuhn SAS, 67700 Saverne (FR)
(72) Inventeur: KOEPPEL, Frédéric, 67270 HOCHFELDEN (FR)
(74) Mandataire: Hager, Esther Evelyne

(56) Documents cités:
- EP-A1- 3 788 862
- EP-B1- 0 291 810
- DE-U1- 8 602 563

## Description

La présente invention porte sur une machine agricole se déplaçant selon une direction d'avance en utilisation et comprenant un châssis et deux groupes latéraux, chaque groupe latéral étant articulé de part et d'autre du châssis du châssis de manière à pouvoir pivoter autour d'un premier axe de débattement sensiblement parallèle à la direction d'avance. Chaque groupe latéral comprend plusieurs rotors, chacun étant animé en rotation autour d'un axe de rotation. Les rotors d'un groupe latéral sont articulés entre eux autour d'au moins un deuxième axe de débattement sensiblement parallèle à la direction d'avance. Chaque groupe latéral peut adopter une configuration déployée d'utilisation dans laquelle les axes de rotation de ses rotors sont compris dans un même plan, et une configuration de transport dans laquelle ces axes de rotation sont sensiblement horizontaux. Chaque groupe latéral comprend une partie intérieure comportant le premier rotor et le deuxième rotor et une partie extérieure comportant au moins les deux derniers rotors à partir du châssis, chaque partie extérieure pouvant pivoter entre une position à côté et une position au-dessus de la partie intérieure respective, chaque groupe latéral pouvant pivoter d'environ 90° autour du premier axe de débattement de sorte que les parties extérieures sont positionnées, vu selon la direction d'avance, au moins partiellement entre les parties intérieures en configuration de transport des groupes latéraux. La machine comporte deux panneaux de signalisation visibles depuis l'arrière de la machine en configuration de transport.

Une telle machine est par exemple connue du document EP3788862A1. Les panneaux de signalisation de la machine divulguée par ce document sont solidaires du châssis et reliés à celui-ci par le biais d'une structure de liaison s'étendant jusqu'à derrière les rotors autant en configuration déployée qu'en configuration de transport. Les panneaux sont ainsi situés à l'arrière du châssis dans toutes les configurations. La structure de liaison doit alors présenter une longueur permettant durant les transpositions d'un groupe latéral entre ses configurations déployée et de transport, que les rotors ne percutent pas le panneau de signalisation ni sa structure de liaison. Par conséquent, les panneaux de signalisation sont éloignés du châssis, en vue latérale, d'une distance supérieure au rayon de la trajectoire extérieure d'un rotor. Un inconvénient de cette conception est qu'elle implique un allongement de la machine en configuration déployée d'utilisation, empêchant l'approche d'un obstacle situé à l'arrière de la machine, comme une barrière ou un arbre par exemple, et compliquant voire interdisant le travail de la totalité du champ. Cette longueur de la structure de liaison implique également un porte-à-faux important des panneaux à l'arrière de la machine, nécessitant une structure de liaison dimensionnée pour résister aux efforts liés à ce porte-à-faux. Il est ainsi fréquent que les structures de liaison soient renforcées par équerrage et/ou par augmentation de leur section. Également, l'étendue de la structure de liaison et l'emplacement des panneaux implique un accès difficile à l'arrière du châssis. Toute maintenance, par exemple sur les rotors centraux portés directement par le châssis, est ainsi difficile, voire dangereuse.

La présente invention a pour but principal de pallier les inconvénients précités et propose à cet effet, pour une machine du type évoqué en introduction, qu'un panneau de signalisation est solidarisé avec la partie extérieure de chaque groupe latéral et est situé au moins partiellement au-dessus de la partie extérieure respective en configuration déployée.

L'invention sera mieux comprise, grâce à la description ci-après, qui se rapporte à des variantes de réalisation préférées, donnés à titre d'exemples non limitatifs, et expliqués avec référence aux dessins schématiques annexés, dans lesquels :
[Fig. 1],
[Fig. 2] et
[Fig. 3] représentent partiellement, respectivement en vue de dessus, en vue arrière et en vue en élévation latérale, une machine agricole selon un premier mode de réalisation de l'invention, ce en configuration déployée, la machine de la figure 3 étant attelée à un tracteur ;
[Fig. 4] et
[Fig. 5] sont des vues partielles de dessus et à une échelle différente de segments et de la ligne de transmission de mouvement d'un groupe latéral faisant partie de la machine des figures 1 à 3, respectivement en configuration déployée dudit groupe latéral et après pivotement des rotors orientables autour de l'axe d'orientation (figure 5) ;
[Fig. 6A] ;

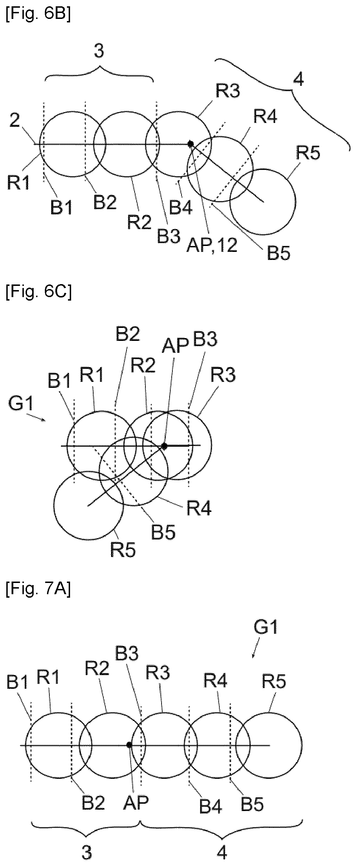

[Fig. 6B] et
[Fig. 6C] sont des vues schématiques de dessus d'un groupe latéral d'une machine selon un mode de réalisation préféré respectivement en configuration déployée (6A), après pivotement des rotors orientables autour de l'axe d'orientation (6B) et après pivotement de la partie extérieure au-dessus de la partie intérieure (6C) ;
[Fig. 7A],

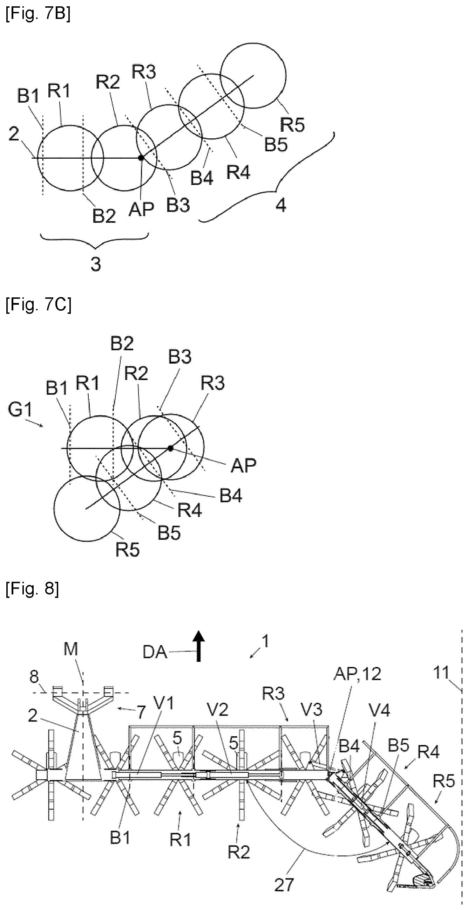

[Fig. 7B] et
[Fig. 7C] sont des vues schématiques de dessus d'un groupe latéral d'une machine agricole selon une première variante de réalisation de l'invention, respectivement en configuration déployée (7A), après pivotement des rotors orientables autour de l'axe d'orientation (7B) et après pivotement de la partie extérieure au-dessus de la partie intérieure (7C) ;
[Fig. 8] est une vue partielle de dessus d'une machine selon l'invention avec un unique groupe latéral dans une configuration telle qu'illustrée sur la figure 6B ;

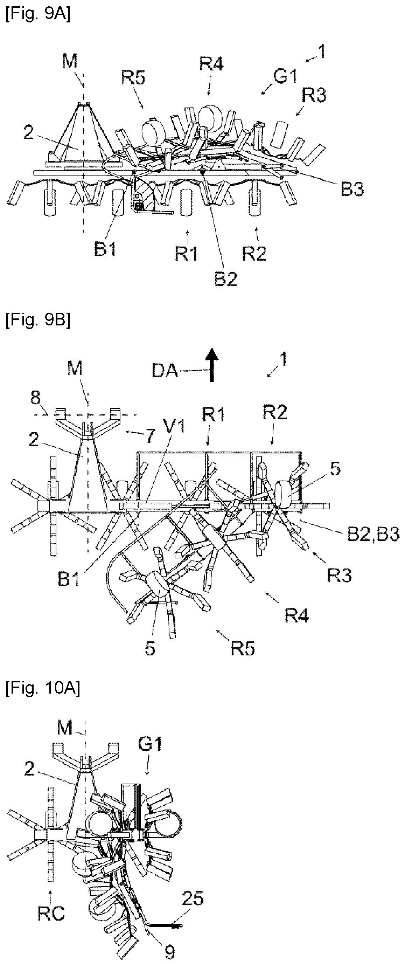

[Fig. 9A] et
[Fig. 9B] sont des vues respectivement arrière et de dessus de la machine représentée figure 8 après pivotement de la partie extérieure du groupe latéral au-dessus de sa partie intérieure ;
[Fig. 10A],

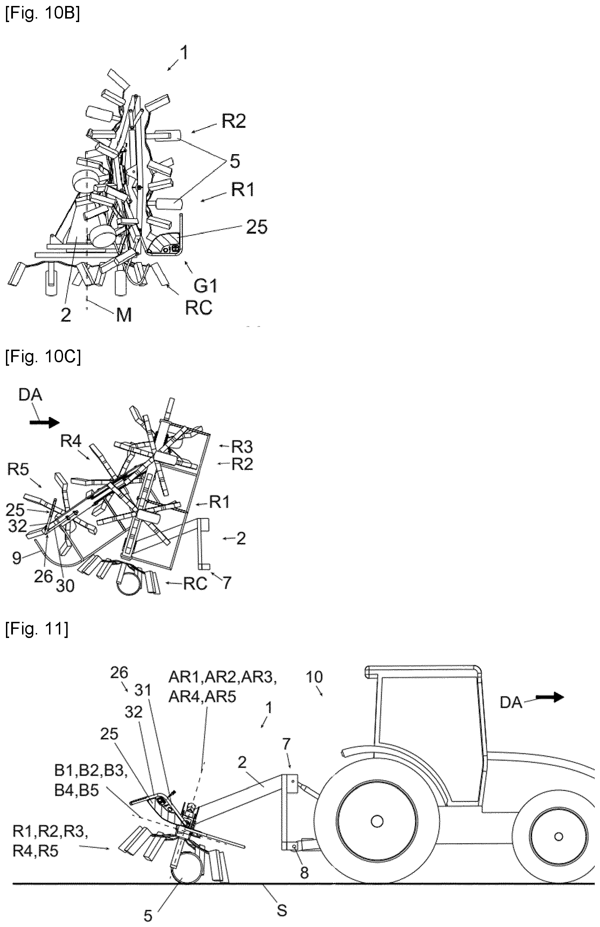

[Fig. 10B] et
[Fig. 10C] sont respectivement des vues de dessus, arrière et en élévation latérale de la machine représentée figures 8 et 9 lorsqu'elle est en configuration de transport (configuration entièrement repliée), et,

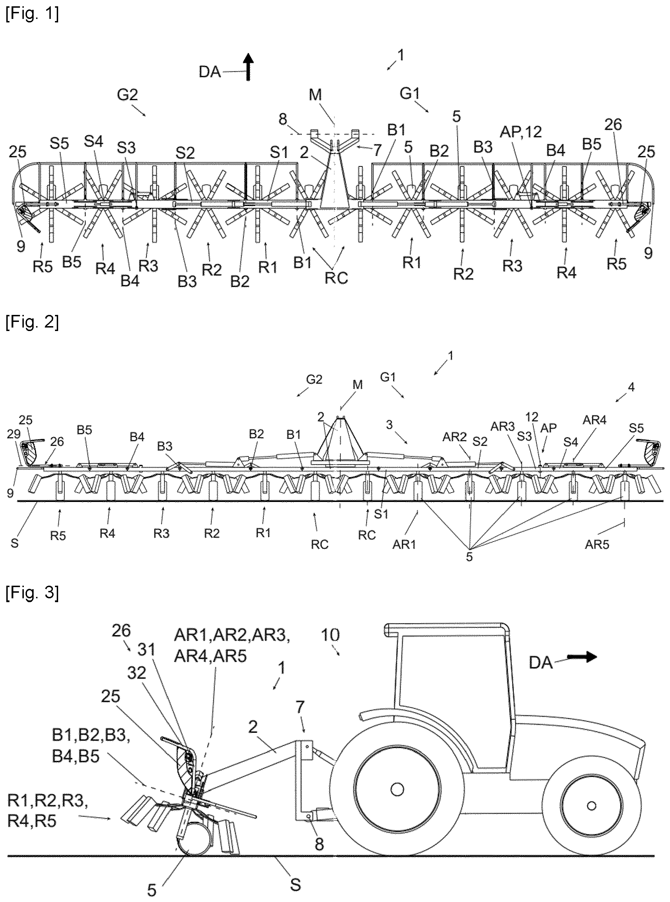

[Fig. 11] est une vue latérale similaire à la figure 3 dans laquelle le panneau de signalisation est escamoté.

Les figures 1 à 3 et 6 à 10 illustrent toutes, au moins en partie, une machine agricole (1) se déplaçant selon une direction d'avance (DA) en utilisation et comprenant un châssis (2) et deux groupes latéraux (G1, G2). Chaque groupe latéral (G1, G2) est articulé de part et d'autre du châssis (2) de manière à pouvoir pivoter autour d'un premier axe de débattement (B1) sensiblement parallèle à la direction d'avance (DA).

Chaque groupe latéral (G1, G2) comprend plusieurs rotors (R1, R2, R3, R4, R5). Chaque rotor (R1, R2, R3, R4, R5) est animé en rotation autour d'un axe de rotation (AR1, AR2, AR3, AR4, AR5). Les rotors (R1, R2, R3, R4, R5) de chaque groupe latéral (G1, G2) sont articulés entre eux autour d'au moins un deuxième axe de débattement (B2) sensiblement parallèle à la direction d'avance (DA) en configuration déployée. Chaque groupe latéral (G1, G2) peut adopter une configuration déployée d'utilisation dans laquelle les axes de rotation (AR1, AR2, AR3, AR4, AR5) de ses rotors (R1, R2, R3, R4, R5) sont compris dans un même plan. Chaque groupe latéral (G1, G2) peut adopter une configuration de transport dans laquelle ces axes de rotation (AR1, AR2, AR3, AR4, AR5) sont sensiblement horizontaux.

Chaque groupe latéral (G1, G2) comprend une partie intérieure (3) comportant le premier rotor (R1) et le deuxième rotor (R2) à partir du châssis (2) et une partie extérieure (4) comportant au moins les deux derniers rotors (R3, R4, R5) à partir du châssis (2). Chaque partie extérieure (4) peut pivoter entre une position à côté (latéralement à l'extérieur - configuration déployée) de la partie intérieure (3) et une position au-dessus (superposée - configuration repliée de transport) de ladite partie intérieure (3) respective. En outre, chaque groupe latéral (G1, G2) peut pivoter d'environ 90° autour du premier axe de débattement (B1) de sorte que les parties extérieures (4) sont positionnées, vu selon la direction d'avance (DA), au moins partiellement entre les parties intérieures (3) en configuration de transport des groupes latéraux (G1, G2).

Afin d'être conforme à la réglementation de nombreux pays, la machine (1) comporte en outre deux panneaux de signalisation (25) visibles depuis l'arrière de la machine (1) en configuration de transport, chaque panneau de signalisation étant relié au châssis (2) par une structure de liaison (26).

Conformément à l'invention, un panneau de signalisation (25) est solidarisé avec la partie extérieure (4) de chaque groupe latéral (G1, G2). De plus, ce panneau de signalisation (25) est situé au moins partiellement au-dessus de la partie extérieure (4) respective en configuration déployée. Chaque panneau de signalisation (25) étant ainsi rapproché du plan contenant les axes de rotation (AR1, AR2, AR3, AR4, AR5) du groupe latéral (G1, G2) correspondant en configuration déployée, la structure de liaison (26) est ainsi raccourcie. Le porte à faux des panneaux de signalisation (25) est ainsi réduit, et la structure de liaison (26) soumise à moins d'efforts. Cette dernière peut ainsi être allégée et/ou nécessiter moins de renforts structurels, évitant un surcoût. La longueur de la machine (1) en configuration déployée étant également diminuée, sa manœuvrabilité est améliorée. De plus, dans cette configuration, aucun élément ne dépasse à l'arrière des rotors (R1, R2, R3, R4, R5), de sorte qu'il est possible d'approcher ces derniers par l'arrière au plus près d'un obstacle tel qu'un arbre ou une barrière. La totalité d'un champ peut ainsi être travaillé sans manœuvre particulière. Le risque d'endommagement des panneaux de signalisation (25) et/ou de la structure de liaison (26) est aussi diminué, particulièrement lors d'une marche arrière. Enfin, l'arrière de la machine (1) est plus facilement accessible, facilitant et sécurisant une maintenance à ce niveau de la machine (1) en configuration déployée, notamment sur les rotors centraux (RC) portés par le châssis (2).

Il ressort des figures 1 à 3 notamment qu'un panneau de signalisation (25) est une plaque hachurée. Entre les hachures, les bandes sont préférentiellement rouges et blanches. En outre, chaque panneau de signalisation (25) peut comporter également un système d'éclairage, de préférence avec des feux de route et des feux clignotants.

Chaque groupe latéral (G1, G2) comprend au moins quatre rotors (R1, R2, R3, R4, R5), permettant d'augmenter la largeur de travail et donc de travailler plus de surface lors d'un passage ou d'une utilisation de la machine (1), accélérant ainsi le chantier agricole. La largeur est à considérer horizontalement et perpendiculairement à la direction d'avance (DA). La machine (1) peut également comporter deux rotors centraux (RC), ces derniers étant portés directement par le châssis (2). Ainsi, la machine agricole (1) comporte au moins dix rotors, à savoir au moins huit (2x4) rotors au niveau desdits groupes latéraux (G1, G2) et deux rotors centraux (RC). Afin d'augmenter encore la largeur de travail en configuration déployée, ce sans complexifier davantage la machine (1) et tout en conservant des dimensions réduites en configuration de transport, chaque groupe latéral (G1, G2) peut comprendre avantageusement, tel que représentée sur les figures 1, 6A et 7A notamment, cinq rotors (R1, R2, R3, R4, R5). En effet, ainsi qu'il ressort de la figure 1, en configuration déployée, chaque groupe latéral (G1, G2) s'étend transversalement, et de préférence perpendiculairement, à la direction d'avance (DA).

De préférence, les rotors (R1, R2, R3, R4, R5) d'un groupe latéral (G1, G2) sont également articulés entre eux autour d'un axe dit d'orientation (AP) sensiblement vertical en configuration déployée. L'axe d'orientation (AP) est situé entre le deuxième axe de rotation (AR2) et le quatrième axe de rotation (AR4) à partir du châssis (2). Des rotors dits orientables (R3, R4, R5) peuvent pivoter par rapport au châssis (2) autour de l'axe d'orientation (AP) selon un angle compris entre 20° et 60°. Les rotors orientables (R3, R4, R5) d'un groupe latéral (G1, G2) sont donc ceux pouvant pivoter autour de l'axe d'orientation (AP) par rapport au châssis (2), respectivement par rapport aux autres rotors. Le fait de pouvoir pivoter les rotors orientables (R3, R4, R5) autour de l'axe d'orientation (AP) selon un angle d'au moins 20° permet de diminuer l'encombrement du groupe latéral (G1, G2) selon une direction perpendiculaire à la direction d'avance (DA). La hauteur de la machine en configuration de transport peut donc être moindre. L'angle de pivotement des rotors orientables (R3, R4, R5) autour de l'axe d'orientation (AP) étant inférieur à 60°, la dimension d'un groupe latéral (G1, G2) selon la direction d'avance (DA) en configuration de transport est réduite. Il en résulte une réduction de la longueur de la machine (1) en configuration de transport. En outre, plus l'angle de pivotement des rotors orientables (R3, R4, R5) autour de l'axe d'orientation (AP) est important, plus importants seront les efforts liés au poids des rotors orientables (R3, R4, R5) en configuration de transport. Avec une telle disposition, la structure du groupe latéral (G1, G2) est moins sollicitée.

Déplacer la partie extérieure (4) au-dessus de la partie intérieure (3), permet de diminuer encore davantage la dimension du groupe latéral (G1, G2) selon une direction horizontale et perpendiculaire à la direction d'avance (DA), résultant en une hauteur moindre en configuration de transport. Le cas échéant, c'est bien sûr la partie extérieure (4) qui comporte le cinquième rotor (R5).

La largeur de travail de la machine (1) est importante en configuration déployée d'utilisation tout en présentant des dimensions réduites en configuration de transport. L'encombrement en configuration de transport permet de respecter la majorité des normes et règlementation en vigueur.

En vue d'éviter de nombreuses itérations des termes « à partir du châssis (2) », il est spécifié que chaque élément doté d'un numéro d'ordre est à considérer à partir du châssis (2). Par exemple, le premier rotor (R1) d'un groupe latéral (G1, G2) est situé, en configuration déployée, entre le châssis (2) et le deuxième rotor (R2) du même groupe latéral (G1, G2). Le deuxième rotor (R2) est, lui, situé entre les premier (R1) et troisième (R3) rotors du même groupe latéral (G1, G2) en configuration déployée ... etc. Il en va de même pour les axes de rotation, les axes de débattement, et les segments. Par ailleurs, dans ce document, l'intérieur fait référence au centre de la machine (1), plus exactement à son plan médian (M), passant par le châssis (2).

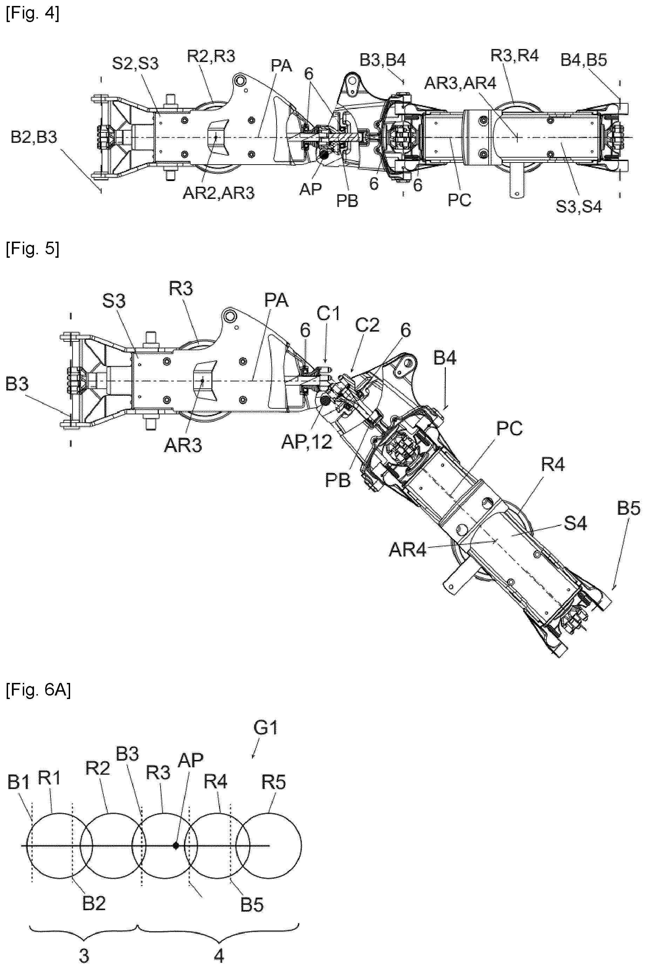

Il ressort des figures 1 et 2 notamment, que la structure de chaque groupe latéral (G1, G2) est formée par des segments (S1, S2, S3, S4, S5) portant les rotors (R1, R2, R3, R4, R5). Le premier segment (S1) de chaque groupe latéral (G1, G2) est relié au châssis (2) par le premier axe de débattement (B1). Chaque groupe latéral (G1, G2) peut ainsi pivoter par rapport au châssis (2) autour dudit premier axe de débattement (B1). Le groupe latéral (G1, G2), respectivement le premier segment (S1), pourrait aussi être articulé avec le châssis (2) par une rotule qui permet de pivoter autour du premier axe de débattement (B1). Deux rotors (R1, R2, R3, R4, R5) sont dits adjacents lorsque leur trajectoire extérieure se chevauchent. Sur les figures 6 et 7, les rotors (R1, R2, R3, R4, R5) sont représentés par leur trajectoire extérieure respective. Un segment (S1, S2, S3, S4, S5) est adjacent à un autre si son, respectivement un de ses, rotor(s) est adjacent au, respectivement à un des, rotor(s) dudit autre segment. Deux segments (S1, S2, S3, S4, S5) adjacents sont reliés par au moins une articulation grâce à laquelle ils peuvent pivoter l'un par rapport à l'autre avec leur(s) rotor(s) respectif(s). Ainsi, deux segments (S1, S2, S3, S4, S5) adjacents peuvent être articulés par deux axes de débattement (B2, B3, B4, B5), ou encore par un axe de débattement (B2, B3, B4, B5) et l'axe d'orientation (AP).

Ainsi qu'il ressort des figures 1 et 2, les panneaux de signalisation (25) sont solidarisés à la partie extérieure (4) respective via la structure du groupe latéral (G1, G2) concerné. Dans le mode de réalisation préféré, chaque panneau de signalisation (25) est solidarisé au dernier segment (S4, S5) correspondant. Le dernier segment (S4, S5) d'un groupe latéral (G1, G2) est le plus éloigné du châssis (2) en configuration déployée. De la même manière, le dernier rotor (R4, R5) est le rotor (R1, R2, R3, R4, R5) du groupe latéral (G1, G2) considéré le plus éloigné du châssis (2) en configuration déployée. Dans le mode de réalisation préféré, le dernier rotor (R5) et le dernier segment (S5) sont les cinquièmes à partir du châssis (2) en configuration déployée. Dans le cas où le groupe latéral (G1, G2) comporte des rotors orientables (R3, R4, R5) tels que décrits ci-dessus, le dernier segment (S4, S5) est le segment (S1, S2, S3, S4, S5) situé le plus à l'arrière du groupe latéral (G1, G2) considéré en configuration de transport. De cette manière, aucun rotor (R1, R2, R3, R4, R5) n'obstrue ou ne cache, même partiellement, les panneaux de signalisation (25) dans cette configuration. Il ressort également des figures 10 qu'avec une telle fixation, chaque panneau de signalisation (25) est positionné à une hauteur autorisée par une majorité de normes en vigueur.

Ainsi qu'il ressort des figures 1 et 2, l'axe d'orientation (AP) est sensiblement vertical en configuration déployée. Dans cette configuration, les axes de rotation (AR1, AR2, AR3, AR4, AR5) sont compris dans un plan sensiblement perpendiculaire à la direction d'avance (DA) en vue de dessus. Ce plan est aussi sensiblement vertical. Les axes de débattement (B1, B2, B3, B4, B5) sont sensiblement parallèles à la direction d'avance (DA) en configuration déployée. Les pivotements autour des axes de débattement (B1, B2, B3, B4, B5) et de l'axe d'orientation (AP) sont réalisés par des actionneurs (V1, V2, V3, V4), préférentiellement de type vérins hydrauliques commandables depuis le tracteur (10). Il ressort enfin des figures 1 et 2 qu'en configuration déployée, la partie extérieure (4) est dans une position où elle est à côté de la partie intérieure (3) vu selon la direction d'avance (DA). Dans la configuration déployée, la partie extérieure (4) est située latéralement à l'extérieur de la partie intérieure (3) respective.

L'invention concerne préférentiellement une machine (1) de fenaison de type faneuse dont chaque rotor (R1, R2, R3, R4, R5), et rotor central (RC) le cas échéant, comporte des bras à l'extrémités périphériques desquels sont fixées des dents. Ces dernières permettent de ratisser et de projeter vers l'arrière de la machine (1) un produit tel que de l'herbe gisant au sol (S), en vue d'accélérer le séchage dudit produit. Dans le cas d'une faneuse, la trajectoire extérieure d'un rotor (R1, R2, R3, R4, R5) est la trajectoire formée par sa dent extérieure lors de sa rotation autour l'axe de rotation (AR1, AR2, AR3, AR4, AR5) correspondant. Chaque rotor (R1, R2, R3, R4, R5) est décalé par rapport au(x) rotor(s) (R1, R2, R3, R4, R5) adjacent(s), et au rotor central (RC) adjacent le cas échéant, selon son axe de rotation (AR1, AR2, AR3, AR4, AR5). Dans l'exemple représenté, chaque rotor compte six bras, chacun décalé de 30° par rapport au(x) rotor(s) (R1, R2, R3, R4, R5) adjacent(s), et au rotor central (RC) adjacent le cas échéant. Dans un mode de réalisation alternatif non représenté, la machine (1) pourrait être une faucheuse dont chaque rotor (R1, R2, R3, R4, R5) serait équipé de couteaux formant, lors de leur rotation, une trajectoire extérieure centrée sur l'axe de rotation (AR1, AR2, AR3, AR4, AR5) respectif.

Afin de s'assurer de retourner le produit lors de sa projection vers l'arrière et d'obtenir ainsi un séchage plus uniforme, les axes de rotation (AR1, AR2, AR3, AR4, AR5) sont de préférence légèrement inclinés vers l'avant. On comprend dans ce document par « sensiblement vertical » une direction formant un angle supérieur à 60° avec une direction horizontale. Dans le mode de réalisation préféré, chaque axe de rotation (AR1, AR2, AR3, AR4, AR5) forme un angle compris entre 5° et 25°, et plus préférentiellement entre 10° et 20°, par rapport à la verticale, en projection sur le plan médian (M). Afin d'obtenir une machine (1) compacte en configuration de transport, les axes de débattement (B1, B2, B3, B4, B5) sont sensiblement perpendiculaires aux axes de rotation (AR1, AR2, AR3, AR4, AR5), en projection sur le plan médian (M). Par « sensiblement parallèle », on comprend dans ce document que les deux droites ou directions citées forment un angle inférieur à 30°. Ainsi, les axes de débattement (B1, B2, B3, B4, B5) forment, dans le mode de réalisation préféré, un angle avec la direction d'avance (DA) inférieur à 30°, et plus préférentiellement inférieur à 20° en configuration déployée.

La machine (1) comporte un dispositif d'attelage (7) situé à l'avant. Ce dernier est destiné être connecté à un véhicule tracteur (10). Il est de préférence de type trois points. En configuration transport, la machine (1) n'est pas en contact avec le sol (S). Ce type de machine (1), portée par le tracteur (10) en configuration transport, est plus facilement manœuvrable.

Une droite dite d'attelage (8) passant par les deux tourillons inférieurs du dispositif d'attelage (7) est orientée horizontalement. Le plan dit médian (M) est orthogonal à la droite d'attelage (8) et parallèle à la direction d'avance (DA). Ce plan médian (M) est en outre situé à égale distance des tourillons inférieurs du dispositif d'attelage (7). A moins d'une mention contraire, toute orientation indiquée dans ce document est à considérer pour une machine (1) en configuration déployée, attelée à un véhicule tracteur (10), le tracteur (10) et la machine (1) étant disposés sur un support, respectivement un sol (S), horizontal et plan. La direction d'avance (DA) est orientée sensiblement horizontalement.

La transposition de la machine (1) depuis sa configuration déployée d'utilisation vers sa configuration de transport est cette même transposition pour les deux groupes latéraux (G1, G2). De préférence, lors des transpositions, un groupe latéral (G1) est transposé avec un léger décalage temporel par rapport à l'autre groupe latéral (G2) afin d'éviter qu'ils ne se percutent mutuellement. Les segments (S1, S2, S3, S4, S5) des deux groupes latéraux (G1, G2) sont sensiblement symétriques par rapport au plan médian (M), au moins dans les configurations déployée et de transport de la machine (1). Lors de l'utilisation de la machine (1), au moins un groupe latéral (G1, G2) est en configuration déployée. Lorsque les deux groupes latéraux (G1, G2) sont en configuration déployée, la machine (1) est en configuration déployée. Lorsque les deux groupes latéraux (G1, G2) sont en configuration de transport, la machine (1) est en configuration de transport. Il en va de même pour toutes les configurations.

Selon une autre caractéristique avantageuse de l'invention, la partie extérieure (4) de chaque groupe latéral (G1, G2) est plus longue que sa partie intérieure (3). De cette manière, on s'assure de ne pas dépasser une hauteur déterminée en configuration de transport. Grâce au pivotement des rotors orientables (R3, R4, R5) autour de l'axe de pivotement (AP), lors de la transposition d'un groupe latéral (G1, G2) depuis sa configuration déployée d'utilisation vers sa configuration de transport, les parties extérieures (4) ne se percutent pas mutuellement, et ne percutent pas le châssis (2). De plus, il ressort des figures 10, qu'avec des parties extérieures (4) plus longues que les parties intérieures (3), des structures de liaison (26) des panneaux de signalisation (25) qui seraient reliées au châssis (2) seraient également particulièrement longues, et présenteraient une forme complexe à réaliser.

Ainsi qu'il ressort de la figure 1 notamment, chaque groupe latéral (G1, G2) peut comporter une protection latérale (9) s'étendant plus loin du châssis (2) que le dernier rotor (R4, R5). Dans le cas d'un groupe latéral (G1, G2) comportant quatre rotors (R1, R2, R3, R4), la partie extérieure (4) est donc plus longue que la partie intérieure (3) du fait de la protection latérale (9).

Du fait que chaque panneau de signalisation (25) et sa structure de liaison (26) sont pivotés avec le groupe latéral (G1, G2) respectif, respectivement avec la partie extérieure (4) de laquelle il est solidaire, il n'est pas nécessaire que le panneau de signalisation (25) et sa structure de liaison (26) soient situés en dehors des trajectoires de déplacement des groupes latéraux (G1, G2) lors de leurs transpositions entre les configurations déployée et de transport. Selon une caractéristique intéressante, chaque panneau de signalisation (25) est situé, en configuration déployée, plus proche du châssis (2) que la protection latérale (9) correspondante. De cette manière, en configuration déployée, la largeur de la machine (1) n'est pas augmentée. De plus, en configuration de transport, chaque panneau de signalisation (25) est situé plus proche du châssis (2) que l'extrémité arrière de la machine (1). La machine (1) occupe ainsi une surface au sol (S) moindre en configuration de transport. Préférentiellement, chaque panneau de signalisation (25) est situé, en configuration déployée, plus proche du châssis (2) que de la trajectoire extérieure du rotor (R4, R5) du segment (S4, S5) auquel il est solidarisé, de sorte qu'en configuration de transport, la machine (1) est moins longue, améliorant ainsi sa manœuvrabilité. Ainsi qu'autorisé par une majorité de normes, chaque panneau de signalisation (25) est situé à moins d'un mètre devant l'extrémité arrière de la machine (1).

Selon une autre caractéristique intéressante, lors des transpositions d'un groupe latéral (G1, G2) entre configuration déployée et configuration de transport, ses rotors orientables (R3, R4, R5) sont pivotés autour de l'axe d'orientation (AP) selon un angle d'orientation (27), et, en configuration déployée, le panneau de signalisation (25) forme par rapport au plan passant par les axes de rotation (AR1, AR2, AR3, AR4, AR5), en vue selon un des axes de rotation (AR1, AR2, AR3, AR4, AR5), un angle d'une valeur sensiblement égale à la valeur de l'angle d'orientation (27). Par conséquent, le panneau de signalisation (25) est orienté au moins sensiblement parallèlement à la droite d'attelage (8) en configuration de transport, et est donc particulièrement visible depuis l'arrière de la machine (1).

De préférence, les rotors orientables (R3, R4, R5) peuvent pivoter autour de l'axe d'orientation (AP) selon un angle d'environ 45° par rapport au châssis (2). Lorsque chaque groupe latéral (G1, G2) comprend cinq rotors (R1, R2, R3, R4, R5), cette caractéristique offre un bon compromis entre la longueur de la machine (1) selon la direction d'avance (DA) et sa hauteur en configuration de transport, tout en augmentant significativement sa largeur de travail en configuration déployée.

L'orientation du panneau de signalisation (25) en configuration de transport et en vue latérale est dépendante du tracteur (10). En effet, pour éviter toute interaction de la machine (1) avec le sol (S), la machine (1) est pivotée vers le haut par rapport au tracteur (10), lui permettant de se déplacer plus rapidement sans devoir équiper la machine (1) en conséquence. Ainsi qu'il ressort de la figure 1, le panneau de signalisation (25) forme un angle compris entre 5° et 45° par rapport à la direction d'avance (DA) et en vue latérale. De cette manière, le panneau de signalisation (25) est orienté sensiblement perpendiculairement à la direction d'avance (DA) en configuration de transport, améliorant sa visibilité depuis l'arrière de la machine (1) en configuration de transport.

Chaque groupe latéral (G1, G2) peut pivoter autour du premier axe de débattement (B1) respectif dans le même sens de pivotement que sa partie extérieure (4) par rapport à la partie intérieure (3) respective. De préférence, pour les transpositions entre configuration déployée d'utilisation et configuration de transport, chaque groupe latéral (G1, G2) est pivoté d'environ 90° autour de l'axe de débattement (B1) respectif. Ce pivotement permet d'atteindre la position de transport du groupe latéral (G1, G2) respectif. C'est grâce à ce pivotement des groupes latéraux (G1, G2) que les axes de rotation (AR1, AR2, AR3, AR4, AR5) sont orientés sensiblement horizontalement en configuration de transport. Dans cette configuration, les axes de rotation (AR1, AR2, AR3, AR4, AR5) sont également orientés perpendiculairement à la direction d'avance (DA). Ainsi qu'il ressort de la figure 10B, en configuration de transport des groupes latéraux (G1, G2), les parties extérieures (4) sont positionnées au moins partiellement entre les parties intérieures (3) vues selon la direction d'avance (DA). Cette particularité permet de réduire la largeur de la machine (1) ainsi que de déplacer son centre de gravité vers l'avant, assurant une meilleure stabilité de la machine (1) en configuration de transport. Aussi, il ressort de la figure 10C, qu'en configuration de transport d'un groupe latéral (G1, G2), le plan passant par les premier (AR1) et deuxième (AR2) axes de rotation forme un angle d'environ 45° vers le bas et l'arrière avec le plan passant par les troisième (AR3) et quatrième (AR4) axes de rotation. Dans cette configuration, la partie extérieure (4) prend appui sur le châssis (2), permettant avantageusement de soulager la structure du groupe latéral respectif. De préférence, chaque groupe latéral (G1, G2) est pivotée d'environ 90° autour de l'axe de débattement (B1) respectif une fois que le pivotement de sa partie extérieure (4) par rapport à la partie intérieure (3) respective est achevé.

En accord avec le mode de réalisation préféré ressortant des figures 1 à 3, 6 et 8 à 10, l'axe d'orientation (AP) est situé entre le troisième axe de rotation (AR3) et le quatrième axe de rotation (AR4) à partir du châssis (2) en configuration déployée. Avec une telle disposition de l'axe d'orientation (AP), les rotors orientables (R4, R5) sont moins nombreux (figures 6), limitant l'effort à fournir pour leur pivotement. En effet, les rotors orientables (R4, R5) sont alors les deux derniers rotors du groupe latéral (G1, G2) considéré. Dans ce mode de réalisation le centre de gravité de chaque groupe latéral (G1, G2) est abaissé davantage, rendant la machine (1) plus stable en configuration de transport.

La partie extérieure (4) peut être pivotée autour du deuxième (B2) ou du troisième (B3) axe de débattement d'un angle supérieur à 150°. Dans le mode de réalisation préféré des figures 6, la partie extérieure (4) est pivotée autour du troisième axe de débattement (B3) d'un angle d'environ 160°. Une fois ce pivotement terminé (figures 6B, 7B et 9), la partie extérieure (4) occupe la position dans laquelle elle est au-dessus de la partie intérieure (3) respective vu selon la direction d'avance (DA). Il ressort des figures 6 et 7 que chaque partie extérieure (4) comporte les troisième rotor (R3) et quatrième rotor (R4), et, le cas échéant, le cinquième rotor (R5) du groupe latéral (G1, G2) respectif à partir du châssis (2).

Dans le mode de réalisation préféré, l'axe d'orientation (AP) n'est ni confondu ni concourant avec les axes de rotation (AR1, AR2, AR3, AR4, AR5). La hauteur de la machine (1) en configuration de transport peut ainsi être réduite. Plus précisément encore, l'axe d'orientation (AP) est situé entre le troisième axe de rotation (AR3) et le quatrième axe de débattement (B4). Préférentiellement, l'axe d'orientation (AP) n'est concourant avec aucun axe de débattement (B1, B2, B3, B4, B5). Une telle réalisation laisse, par rapport à une réalisation dans laquelle l'axe d'orientation (AP) et l'un des axes de débattement (B2, B3, B4) sont concourants, plus de place pour l'implantation des actionneurs (V1, V2, V3, V4). De plus, ces actionneurs sont ainsi soumis à moins de variation d'angle permettant l'utilisation d'articulation rotulante standard pour leur fixation à la structure.

Comme le montrent les figures 6 et 7, le pivotement des rotors orientables (R3, R4, R5) autour de l'axe d'orientation (AP) peut se faire vers l'avant ou vers l'arrière. Selon une première variante de réalisation représenté sur les figures 7, les rotors orientables (R3, R4, R5) peuvent pivoter par rapport au châssis (2) vers l'avant autour de l'axe d'orientation (AP) qui est situé entre les deuxième (AR2) et troisième (AR3) axes de rotation. Dans cette variante, la partie extérieure (4) comporte tous les rotors orientables (R3, R4, R5). Selon cette première variante la course de l'actionneur d'orientation (V3) permettant le pivotement autour de l'axe d'orientation (AP) doit être plus importante afin que la machine (1) puisse occuper une configuration de fanage en bordure. En effet, pour atteindre cette configuration, les rotors orientables (R3, R4, R5) doivent être pivotés autour de l'axe d'orientation (AP) dans le sens opposé à celui pour la transposition depuis la configuration déployée vers la configuration de transport.

Selon une caractéristique avantageuse, au moins un groupe latéral (G1, G2) peut également occuper une configuration de fanage en bordure dans laquelle les rotors orientables (R3, R4, R5) sont pivotés vers l'arrière autour de l'axe d'orientation (AP) d'environ 20° en partant de la configuration déployée du groupe latéral (G1, G2) considéré. La configuration de fanage en bordure permet d'éviter des projections de produit à l'extérieur d'une bordure (11) lorsque le groupe latéral (G1, G2) se déplace le long de ladite bordure (11). La bordure (11) est par exemple la limite du champ.

Ainsi qu'il ressort de la figure 2, chaque rotor (R1, R2, R3, R4, R5) peut être supporté par un appui (5) respectif. Grâce à la verticalité de l'axe d'orientation (AP), les appuis (5) des rotors orientables (R3, R4, R5) restent en contact avec le sol (S) même après avoir été pivotés de 20° autour de l'axe d'orientation (AP). Plus l'axe d'orientation (AP) est proche de la verticale, mieux seront conservés les inclinaisons des axes de débattement (B1, B2, B3, B4, B5) et des axes de rotation (AR1, AR2, AR3, AR4, AR5) dans la configuration de fanage en bordure. Dans le mode de réalisation préféré, l'axe d'orientation (AP) forme ainsi avec l'horizontale un angle supérieur à 75°, et de préférence supérieur à 80°. Dans cette configuration, les secteurs angulaires de débattement des rotors orientables (R3, R4, R5) autour des axes de débattement (B3, B4, B5) correspondants sont ainsi sensiblement égaux à ceux de la configuration déployée, de sorte qu'en configuration de fanage en bordure, ni la qualité de râtelage, ni le tapis végétal ne sont détériorés.

Ainsi qu'il est visible sur la figure 2, chaque appui (5) peut être réalisé par une roulette ou une roue folle. Les axes de roulement de ces roulettes sont sensiblement horizontaux et perpendiculaires à la direction d'avance (DA) dans la configuration déployée. Afin que les axes de roulettes restent perpendiculaires à la direction d'avance (DA) en configuration de fanage en bordure, les roulettes peuvent être montées pivotantes par rapport à leur segment (S1, S2, S3, S4, S5) respectif selon un axe sensiblement vertical. L'appui (5) est de préférence en contact avec le sol (S) dans la configuration déployée. Chaque appui (5) pourrait également être réalisé par un patin glissant sur le sol (S). Chaque appui (5) peut aussi être légèrement excentré par rapport à l'axe de rotation (AR1, AR2, AR3, AR4, AR5) correspondant.

Selon une deuxième variante de réalisation non représentée, chaque groupe latéral (G1, G2) comporte un premier segment (S1) à partir du châssis (2) qui porte les premier (R1) et deuxième rotors (R2), et un second segment (S2) qui porte les troisième (R3) et quatrième rotor (R4). Dans cette variante, le premier segment (S1) est relié au deuxième segment (S2) par le deuxième axe de débattement (B2) et le troisième axe de débattement (B3). Dans cette variante, les rotors d'un groupe latéral sont articulés entre eux uniquement autour des deuxième et troisième axes de débattement (B2, B3). Un inconvénient d'une telle réalisation dans laquelle deux rotors (R1, R2, R3, R4, R5) adjacents ne sont pas articulés selon un axe parallèle à la direction d'avance (DA) est une moins bonne adaptation des segments aux irrégularités du sol (S), ce qui dégrade la qualité de râtelage et/ou provoque la dégradation du tapis végétal.

Conformément avec un mode de réalisation préféré de l'invention, chaque rotor (R1, R2, R3, R4, R5) est porté par un segment (S1, S2, S3, S4, S5) qui lui est propre. Chaque rotor (R1, R2, R3, R4, R5) est alors articulé avec le ou les rotor(s) (R1, R2, R3, R4, R5) adjacent(s) par un axe de débattement (B2, B3, B4, B5) correspondant. Dans la configuration déployée, les pivotements autour des axes de débattement (B1, B2, B3, B4, B5) sont libres, permettant une bonne adaptation des segments (S1, S2, S3, S4, S5) au sol (S). Chaque rotor (AR1, AR2, AR3, AR4, AR5) peut ainsi pivoter par rapport à son ou ses rotor(s) (AR1, AR2, AR3, AR4, AR5) adjacent(s) autour de l'axe de débattement (B1, B2, B3, B4, B5) correspondant selon un certain angle de débattement. Chaque groupe latéral (G1, G2) épousant ainsi mieux les irrégularités du sol (S), on obtient une meilleure qualité de râtelage tout en ménageant le tapis végétal. Dans la configuration de transport, au moins certains des pivotements autour des axes de débattement (B1, B2, B3, B4, B5) sont bloqués, et préférentiellement tous, afin d'éviter tout risque de casse ou de blessure.

Comme le montrent les figures 4 et 5 à titre d'exemple, les segments (S1, S2, S3, S4, S5) de chaque groupe latéral (G1, G2) sont pourvus de portions d'arbres (PA, PB, PC) de transmission de mouvement pour les rotors (R1, R2, R3, R4, R5), guidées en rotation par des paliers (6) et formant ensemble par coopération une ligne de transmission de mouvement pour le groupe latéral (G1, G2) considéré.

La liaison cinématique entre les différentes portions d'arbres (PA, PB, PC) au niveau des axes de débattement (B1, B2, B3, B4, B5) peut être réalisée par exemple par un cardan double (non représenté). Telles que représentées sur la figure 5, ces liaisons sont préférentiellement réalisées par des moyens complémentaires (C1, C2) d'une transmission à doigts. Les moyens complémentaires (C1, C2) sont mutuellement engrenant en configuration déployée. En prévoyant une distance déterminée entre l'axe de débattement (B1, B2, B3, B4, B5) ou l'axe d'articulation (AP) et l'axe de la ligne de transmission, les moyens complémentaires (C1, C2) engrènent également lorsque les portions d'arbre (PA, PB, PC) sont pivotées autour dudit axe, comme représenté sur la figure 5. De cette manière, les rotors (R1, R2, R3, R4, R5) conservent leur orientation autour de leur axe de rotation respectif dans toutes les configurations.

En accord avec une autre caractéristique intéressante, l'axe d'orientation (AP) n'est pas concourant avec l'axe des portions d'arbre (PA, PB, PC) en configuration déployée. Les moyens complémentaires (C1, C2) d'une transmission à doigts autorisent avantageusement un coulissement d'au moins une des deux portions d'arbre (PA, PB, PC) par rapport à l'autre sans qu'ils ne soient découplés. La mise en œuvre d'un cardan double nécessiterait, elle, un coulissement d'au moins une des deux portions d'arbres (PA, PB, PC) par rapport à l'autre pour autoriser le pivotement autour de l'axe (AP). Les portions d'arbres (PA, PB, PC) n'ont ainsi pas besoin d'être télescopiques, évitant de fréquentes opérations de graissage ainsi qu'un surcout. De plus, les portions d'arbres de transmissions télescopiques ne permettent d'ordinaire pas de longues courses de déplacement, particulièrement avec une portion d'arbre de transmission (PB) aussi courte que celle s'étendant entre l'axe d'orientation (AP) et le quatrième axe de débattement (B4).

Le pivot (12) de l'axe d'orientation (AP) est réalisé traversant le segment (S1, S2, S3, S4, S5) concerné, à savoir le troisième segment (S3) dans le mode de réalisation préféré. Il est ainsi guidé en rotation sur la majorité de sa hauteur, et de préférence sur toute sa hauteur, ce qui entraine une meilleure résistance aux efforts et une durée de vie allongée.

Sur les figures 1 à 3, chaque panneau de signalisation (25) est relié au groupe latéral (G1, G2) correspondant par une structure de liaison (26) respective. La structure de liaison (26) est réalisée par un tube, de préférence de section circulaire. Tel que représentée, la structure de liaison (26) comporte trois portions rectilignes (30, 31, 32). Une première portion (30) est orientée sensiblement horizontalement en configuration déployée. Cette première portion (30) est de préférence parallèle au dernier segment (S4, S5) auquel le panneau de signalisation (25), respectivement sa structure de liaison (26), est solidarisé(e). La structure de liaison (26) comporte aussi une deuxième portion (31) orientée sensiblement verticalement en configuration déployée, au moins selon une vue latérale. Cette deuxième portion (31) peut présenter une légère inclinaison par rapport à la verticale, en configuration déployée, vu selon la direction d'avance (DA). Enfin, la structure de liaison (26) présente une troisième portion (32) orientée, en configuration déployée, transversalement à la direction d'avance (DA), et de préférence sensiblement horizontalement. Ainsi qu'il ressort de la figure 1, la troisième portion (32) forme préférentiellement un angle d'environ 45° avec la direction d'avance (DA), en vue de dessus et en configuration déployée. Le panneau de signalisation (25) est solidarisé avec la structure de liaison (26) respective de manière immuable. Il ressort de la figure 11 notamment, que le panneau de signalisation (25) est solidaire des deuxième portion (31) et troisième portion (32). La structure de liaison (26) est solidarisée avec le dernier segment (S4, S5) via la première portion (30).

Ainsi qu'il ressort des figures 3 et 11, chaque panneau de signalisation (25) est optionnellement déplaçable par rapport au segment (S1, S2, S3, S4, S5) auquel il est solidarisé. Dans le mode de réalisation préféré, chaque panneau de signalisation (25) est pivotable par rapport au dernier segment (S4, S5) correspondant selon un axe dit d'effacement (29) orienté transversalement à la direction d'avance (DA) en configuration déployée d'utilisation, permettant avantageusement d'escamoter le panneau de signalisation (25) en cas de contact avec un obstacle lors de l'avance de la machine (1). Plus préférentiellement, l'axe d'effacement (29) est sensiblement parallèle au dernier segment (S4, S5) auquel le panneau de signalisation (25) est solidarisé, simplifiant avantageusement sa structure de liaison (26). Dans la configuration déployée d'utilisation, l'axe d'effacement (29) est ainsi sensiblement horizontal, de sorte que la hauteur d'un groupe latéral (G1, G2) peut être réduite, sans pour autant augmenter celui-ci en largeur. De préférence, chaque panneau de signalisation (25) peut pivoter autour de l'axe d'effacement (29) selon un angle d'au moins 30°, et plus préférentiellement d'au moins 40°. Ainsi qu'il ressort de la figure 11, en position escamoté du panneau de signalisation (25), le groupe latéral (G1, G2) respectif présente une hauteur réduite.

Ainsi qu'il ressort des figures 1 et 2, la totalité de chaque panneau de signalisation (25) et de sa structure de liaison (26) est située au-dessus de la partie extérieure (4) correspondante en configuration déployée. Plus précisément, la totalité de chaque panneau de signalisation (25) et de sa structure de liaison (26) est située à l'intérieure de la trajectoire extérieure du rotor (R1, R2, R3, R4, R5) du segment (S1, S2, S3, S4, S5) auquel le panneau de signalisation (25) est solidarisé, en projection selon l'axe de rotation dudit rotor (R1, R2, R3, R4, R5), réduisant la longueur de la structure de liaison (26).

Un procédé de transposition d'un groupe latéral (G1, G2) d'une machine agricole (1) telle que décrite ci-dessus est proposé ci-dessous. Ce procédé permet de transposer le groupe latéral (G1, G2) considéré d'une configuration déployée d'utilisation vers une configuration de transport.

Ce procédé est caractérisé en ce qu'il consiste à :
- i) pivoter les rotors orientables (R3, R4, R5) autour de leur axe d'orientation (AP) respectif selon un angle compris entre 20° et 60°,
- ii) pivoter une partie extérieure (4) comportant les troisième rotor (R3) et quatrième rotor (R4) au dessus, vu selon la direction d'avance (DA), d'une partie intérieure (3) comportant les premier rotor (R1) et deuxième rotor (R2),
- iii) pivoter autour du premier axe de débattement (B1) correspondant tous les rotors (R1, R2, R3, R4, R5) dans le même sens de pivotement que la partie extérieure (4) respective jusqu'à ce que leurs axes de rotation (AR1, AR2, AR3, AR4, AR5) soient orientés sensiblement horizontalement et perpendiculairement à la direction d'avance (DA).

Selon une première variante, les étapes ci-dessus sont réalisées de manière chronologique, c'est-à-dire successivement dans leur ordre d'énonciation.

Selon une seconde variante, les étapes i) et ii) se chevauchent au moins partiellement dans le temps, voire sont effectuées simultanément. Dans ce dernier cas toutefois, le pivotement à 20° pour faner en bordure n'est possible qu'avec une commande supplémentaire lors de la transposition de la configuration déployée à la configuration de transport.

La transposition de la configuration de transport à la configuration déployée s'effectue en réalisant les étapes inverses et dans l'ordre inverse.

## Revendications

1. Machine agricole (1) se déplaçant selon une direction d'avance (DA) en utilisation et comprenant un châssis (2) et deux groupes latéraux (G1, G2), chaque groupe latéral (G1, G2) étant articulé de part et d'autre du châssis (2) de manière à pouvoir pivoter autour d'un premier axe de débattement (B1) sensiblement parallèle à la direction d'avance (DA) et comprenant plusieurs rotors (R1, R2, R3, R4, R5), chaque rotor (R1, R2, R3, R4, R5) étant animé en rotation autour d'un axe de rotation (AR1, AR2, AR3, AR4, AR5), les rotors (R1, R2, R3, R4, R5) de chaque groupe latéral (G1, G2) étant articulés entre eux autour d'au moins un deuxième axe de débattement (B2) sensiblement parallèle à la direction d'avance (DA), chaque groupe latéral (G1, G2) pouvant adopter une configuration déployée d'utilisation dans laquelle les axes de rotation (AR1, AR2, AR3, AR4, AR5) de ses rotors (R1, R2, R3, R4, R5) sont compris dans un même plan et une configuration de transport dans laquelle ces axes de rotation (AR1, AR2, AR3, AR4, AR5) sont sensiblement horizontaux, chaque groupe latéral (G1, G2) comprenant une partie intérieure (3) comportant le premier rotor (R1) et le deuxième rotor (R2) à partir du châssis (2) et une partie extérieure (4) comportant au moins les deux derniers rotors (R3, R4, R5) à partir du châssis (2), chaque partie extérieure (4) pouvant pivoter entre une position à côté et une position au-dessus de la partie intérieure (3) respective, chaque groupe latéral (G1, G2) pouvant pivoter d'environ 90° autour du premier axe de débattement (B1) de sorte que les parties extérieures (4) sont positionnées, vu selon la direction d'avance (DA), au moins partiellement entre les parties intérieures (3) en configuration de transport des groupes latéraux (G1, G2), la machine (1) comportant en outre au moins deux panneaux de signalisation (25) visibles depuis l'arrière de la machine (1) en configuration de transport, chaque panneau de signalisation étant relié au châssis (2) par une structure de liaison (26), machine (1) **caractérisée en ce qu'**un panneau de signalisation (25) est solidarisé avec la partie extérieure (4) de chaque groupe latéral (G1, G2) et est situé au moins partiellement au-dessus de la partie extérieure (4) respective en configuration déployée d'utilisation.

2. Machine agricole (1) selon la revendication 1, **caractérisée en ce que** la structure de chaque groupe latéral (G1, G2) est formée par des segments (S1, S2, S3, S4, S5) portant les rotors (R1, R2, R3, R4, R5), et **en ce que** chaque panneau de signalisation (25) est solidarisé au dernier segment (S4, S5) correspondant.

3. Machine agricole (1) selon la revendication 1 ou 2, **caractérisée en ce qu'**en configuration déployée, chaque groupe latéral (G1, G2) comporte une protection latérale (9) s'étendant plus loin du châssis (2) que le dernier rotor (R4, R5) et **en ce que** chaque panneau de signalisation (25) est plus proche du châssis (2) que la protection latérale (9) correspondante.

4. Machine agricole (1) selon l'une des revendications 1 à 3, **caractérisée en ce que** chaque groupe latéral (G1, G2) comporte des rotors orientables (R3, R4, R5) pouvant pivoter autour d'un axe d'orientation (AP) sensiblement vertical en configuration déployée.

5. Machine agricole (1) selon la revendication 4, **caractérisée en ce que** lors des transpositions d'un groupe latéral (G1, G2) entre configuration déployée et configuration de transport, ses rotors orientables (R3, R4, R5) sont pivotés autour de l'axe d'orientation (AP) selon un angle d'orientation (27), et, en configuration déployée, le panneau de signalisation (25) forme par rapport au plan passant par les axes de rotation (AR1, AR2, AR3, AR4, AR5), en vue selon un des axes de rotation (AR1, AR2, AR3, AR4, AR5), un angle d'une valeur sensiblement égale à la valeur de l'angle d'orientation (27)..

6. Machine agricole (1) selon la revendication 5, **caractérisée en ce que** chaque panneau de signalisation (25) est déplaçable par rapport au segment (S1, S2, S3, S4, S5) auquel il est solidarisé.

7. Machine agricole (1) selon l'une quelconque des revendications 1 à 6, **caractérisée en ce que** chaque panneau de signalisation (25) est pivotable par rapport au dernier segment (S4, S5) correspondant selon un axe dit d'effacement (29) orienté transversalement à la direction d'avance (DA) en configuration déployée d'utilisation.

8. Machine agricole (1) selon la revendication 7, **caractérisée en ce que** l'axe d'effacement (29) est sensiblement parallèle au dernier segment (S4, S5) auquel le panneau de signalisation (25) est solidarisé.

9. Machine agricole (1) selon l'une quelconque des revendications 1 à 8, **caractérisée en ce que** la partie extérieure (4) de chaque groupe latéral (G1, G2) est plus longue que sa partie intérieure (3).

## Patentansprüche

1. Landwirtschaftliche Maschine (1), die sich im Betrieb in einer Vorschubrichtung (DA) bewegt und ein Gestell (2) sowie zwei Seitengruppen (G1, G2) umfasst, wobei jede Seitengruppe (G1, G2) auf eine jeweilige Seite des Gestells (2) so angelenkt ist, dass sie um eine erste Schwenkachse (B1) schwenken kann, die im Wesentlichen parallel zur Vorschubrichtung (DA) verläuft, und mehrere Rotoren (R1, R2, R3, R4, R5) umfasst, von denen jeder um eine Drehachse (AR1, AR2, AR3, AR4, AR5) in Drehung versetzt wird, wobei die Rotoren (R1, R2, R3, R4, R5) einer Seitengruppe untereinander um mindestens eine zweite Schwenkachse (B2) angelenkt sind, die im Wesentlichen parallel zur Vorschubrichtung (DA) verläuft, wobei jede Seitengruppe (G1, G2) eine ausgefahrene Betriebskonfiguration einnehmen kann, bei der die Drehachsen (AR1, AR2, AR3, AR4, AR5) ihrer Rotoren (R1, R2, R3, R4, R5) in derselben Ebene liegen, sowie eine Transportkonfiguration, bei der diese Drehachsen (AR1, AR2, AR3, AR4, AR5) im Wesentlichen horizontal verlaufen, wobei jede Seitengruppe (G1, G2) einen inneren Teil (3) umfasst, der den ersten Rotor (R1) und den zweiten Rotor (R2) vom Gestell (2) aus gesehen enthält, sowie einen äußeren Teil (4), der mindestens die beiden vom Gestell (2) aus gesehen letzten Rotoren (R3, R4, R5) enthält, wobei jeder äußere Teil (4) zwischen einer Position neben und einer Position über dem jeweiligen inneren Teil (3) schwenkbar ist, wobei jede Seitengruppe (G1, G2) um etwa 90° um die erste Schwenkachse (B1) schwenkbar ist, sodass die äußeren Teile (4), in Vorschubrichtung (DA) gesehen, in der Transportkonfiguration der Seitengruppen (G1, G2) zumindest teilweise zwischen den inneren Teilen (3) positioniert sind, wobei die Maschine (1) außerdem mindestens über zwei Warntafeln (25) verfügt, die in der Transportkonfiguration von der Rückseite der Maschine (1) aus sichtbar sind, wobei jede Warntafel über eine Verbindungsvorrichtung (26) mit dem Gestell (2) verbunden ist, Maschine (1) **dadurch gekennzeichnet, dass** ein Warntafel (25) mit dem äußeren Teil (4) jeder Seitengruppe (G1, G2) verbunden ist und sich in der ausgefahrenen Betriebskonfiguration zumindest teilweise über dem jeweiligen äußeren Teil (4) befindet.

2. Landwirtschaftliche Maschine (1) nach Anspruch 1, **dadurch gekennzeichnet, dass** die Struktur jeder Seitengruppe (G1, G2) aus Segmenten (S1, S2, S3, S4, S5) besteht, die die Rotoren (R1, R2, R3, R4, R5) tragen, und dass jede Warntafel (25) mit dem entsprechenden letzten Segment (S4, S5) verbunden ist.

3. Landwirtschaftliche Maschine (1) nach Anspruch 1 oder 2, **dadurch gekennzeichnet, dass** jede Seitengruppe (G1, G2) in der ausgefahrenen Konfiguration eine seitliche Schutzvorrichtung (9) aufweist, die sich weiter vom Gestell (2) weg erstreckt als der letzte Rotor (R4, R5), und dass sich jede Warntafel (25) näher am Gestell (2) befindet als die entsprechende seitliche Schutzvorrichtung (9).

4. Landwirtschaftliche Maschine (1) nach einem der Ansprüche 1 bis 3, **dadurch gekennzeichnet, dass** jede Seitengruppe (G1, G2) ausrichtbare Rotoren (R3, R4, R5) umfasst, die sich in der ausgefahrenen Konfiguration um eine im Wesentlichen vertikale Ausrichtungsachse (AP) schwenken können.

5. Landwirtschaftliche Maschine (1) nach Anspruch 4, **dadurch gekennzeichnet, dass** bei der Umstellung einer Seitengruppe (G1, G2) zwischen ausgefahrener Konfiguration und Transportkonfiguration deren ausrichtbare Rotoren (R3, R4, R5) um die Ausrichtungsachse (AP) um einen Ausrichtungswinkel (27) geschwenkt sind, und in der ausgefahrenen Konfiguration die Warntafel (25) in Bezug auf die durch die Drehachsen (AR1, AR2, AR3, AR4, AR5) verlaufende Ebene, in der Ansicht entlang einer der Drehachsen (AR1, AR2, AR3, AR4, AR5) gesehen einen Winkel bildet, dessen Wert im Wesentlichen dem Wert des Ausrichtungswinkels (27) entspricht.

6. Landwirtschaftliche Maschine (1) nach Anspruch 5, **dadurch gekennzeichnet, dass** jede Warntafel (25) relativ zu dem Segment (S1, S2, S3, S4, S5), mit dem sie fest verbunden ist, verschiebbar ist.

7. Landwirtschaftliche Maschine (1) nach einem der Ansprüche 1 bis 6, **dadurch gekennzeichnet, dass** jede Warntafel (25) relativ zum letzten entsprechenden Segment (S4, S5) um eine sogenannte Einziehachse (29) schwenkbar ist, die in der ausgefahrenen Betriebskonfiguration quer zur Vorschubrichtung (DA) ausgerichtet ist.

8. Landwirtschaftliche Maschine (1) nach Anspruch 7, **dadurch gekennzeichnet, dass** die Einziehachse (29) im Wesentlichen parallel zu dem letzten Segment (S4, S5) ist, mit dem die Warntafel (25) verbunden ist.

9. Landwirtschaftliche Maschine (1) nach einem der Ansprüche 1 bis 8, **dadurch gekennzeichnet, dass** der äußere Teil (4) jeder Seitengruppe (G1, G2) länger als ihr innerer Teil (3) ist.

## Claims

1. Agricultural machine (1) moving in a forward direction (DA) during use and comprising a chassis (2) and two side units G1, G2), each side unit (G1, G2) being articulated on either side of the chassis (2) so as to be able to pivot about a first pivot axis (B1) substantially parallel to the forward direction (DA) and comprising several rotors (R1, R2, R3, R4, R5), each rotor (R1, R2, R3, R4, R5) rotating about an axis of rotation (AR1, AR2, AR3, AR4, AR5), the rotors (R1, R2, R3, R4, R5) within a side unit (G1, G2) being articulated to one another about at least one second pivot axis (B2) that is substantially parallel to the forward direction (DA), each side unit (G1, G2) being able to adopt a deployed operating configuration in which the axes of rotation (AR1, AR2, AR3, AR4, AR5) of its rotors (R1, R2, R3, R4, R5) lie in the same plane, and a transport configuration in which these axes of rotation (AR1, AR2, AR3, AR4, AR5) are substantially horizontal, each side unit comprising an inner section (3) containing the first rotor (R1) and the second rotor (R2) from the chassis (2), and an outer section (4) containing at least the two rotors (R2, R3, R4) furthest from the chassis (2), each outer section (4) being capable of pivoting between a position adjacent to and a position above the respective inner section (3), each side group (G1, G2) being pivotable by approximately 90° about the first pivot axis (B1) so that the outer sections (4) are positioned, viewed in the forward direction (DA), at least partially between the inner sections (3) in the transport configuration of the side units (G1, G2), the machine (1) being fitted with two signage panels (25) that are visible from the rear of the machine (1) when in transport configuration, each signage panel being connected to the chassis (2) by means of a connecting structure (26), machine (1) **characterized in that** a signage panel (25) is secured to the outer section (4) of each side unit (G1, G2) and is located at least partially above the respective outer section (4) when the machine is in the deployed operating configuration.

2. Agricultural machine (1) according to claim 1, **characterised in that** the structure of each side unit (G1, G2) is formed by segments (S1, S2, S3, S4, S5) that support the rotors (R1, R2, R3, R4, R5) and **in that** each signage panel (25) is secured to the corresponding last segment (S4, S5).

3. Agricultural machine (1) according to claim 1 or 2, **characterised in that** in the deployed configuration, each side unit (G1, G2) includes a side guard (9) that extends further from the chassis (2) than the last rotor (R4, R5) and **in that** each signage panel (25) is positioned closer to the chassis (2) than the corresponding side guard (9).

4. Agricultural machine (1) according to any one of claims 1 to 3, **characterised in that** each side unit (G1, G2) comprises adjustable rotors (R3, R4, R5) that can pivot about an orientation axis (AP) substantially vertical in the deployed configuration.

5. Agricultural machine (1) according to claim 4, **characterised in that** when a side unit (G1, G2) is switched between the deployed configuration and the transport configuration, its adjustable rotors (R3, R4, R5) are pivoted about the orientation axis (AP) through an orientation angle (27), and, in the deployed configuration, the signage panel (25) forms, relative to the plane passing through the axes of rotation (AR1, AR2, AR3, AR4, AR5), as viewed along one of the axes of rotation (AR1, AR2, AR3, AR4, AR5), an angle substantially equal to the value of the orientation angle (27).

6. Agricultural machine (1) according to claim 5, **characterised in that** each signage panel (25) is movable relative to the segment (S1, S2, S3, S4, S5) to which it is attached.

7. Agricultural machine (1) according to any one of claims 1 to 6, **characterised in that** each signage panel (25) is pivotable relative to the corresponding last segment (S4, S5) along a so-called retraction axis (29) oriented transversely to the forward direction (DA) in the deployed operating configuration.

8. Agricultural machine (1) according to claim 7, **characterised in that** the retraction axis (29) is substantially parallel to the last segment (S4, S5) to which the signage panel (25) is attached.

9. Agricultural machine (1) according to any one of claims 1 to 8, **characterised in that** the outer section (4) of each side unit (G1, G2) is longer than its inner section (3). !
